# EUROPÄISCHE PATENTSCHRIFT

(11) **EP 1 978 199 B1**
(45) Veröffentlichungstag und Bekanntmachung des Hinweises auf die Patenterteilung: **25.05.2016**
(21) Anmeldenummer: 07007253.3
(22) Anmeldetag: 05.04.2007
(51) Int. Cl.: E06B 3/66

(54) **Vakuumisolierglas-Bauelement sowie Verfahren und Vorrichtung zu dessen Herstellung**
Vacuum insulation glass and method and device for its manufacture
Composant en verre isolant du vide et procédé et dispositif de fabrication

(43) Veröffentlichungstag der Anmeldung: 08.10.2008
(73) Patentinhaber: Grenzebach Maschinenbau GmbH, 86663 Asbach-Bäumenheim/Hamlar (DE)
(72) Erfinder: Friedl Wolfgang, 86687 Kaisheim (DE); Glaser Siegfried, 37688 Beverungen (DE)
(74) Vertreter: Gallo, Wolfgang

(56) Entgegenhaltungen:
- EP-A- 0 421 239
- WO-A-87/03327
- JP-A- 62 168 693

## Beschreibung

Die Erfindung betrifft ein Vakuumisolierglas-Bauelement, wobei unter diesem Begriff nicht nur eine Vakuumisolierglasscheibe zu verstehen ist, sondern auch ein sonstiges Bauelement, das aus einer Kombination von Vakuumisolierglas mit beispielsweise einem Solarmodul besteht. Die Erfindung betrifft außerdem auch ein Verfahren zur Herstellung eines solchen Vakuumisolierglas-Bauelements.

Die Erfindung bezieht sich daher auf Anordnungen, bei denen mindestens zwei Glasplatten oder andere flächige Glasgebilde mit oder ohne Einschluß eines weiteren flächigen Körpers unter Bildung eines dünnen evakuierten Zwischenraums miteinander verbunden sind.

Vakuumisolierglas ist an sich bekannt. Es unterscheidet sich von herkömmlichem Isolierglas dadurch, dass der Scheibenzwischenraum evakuiert ist, während er bei normalem Isolierglas mit einem Edelgas gefüllt ist. Auch ist bei Vakuumisolierglas der Scheibenzwischenraum bedeutend dünner als bei normalem Isolierglas, nämlich nur etwa 0,7 mm oder weniger, da bei Vakuumisolierglas wegen des Vakuums gar keine Konvektion zwischen den Einzelscheiben stattfindet. Die beiden Einzelscheiben sind durch rasterartig über die Glasfläche verteilte Stützen aneinander abgestützt, so dass der äußere Luftdruck sie nicht zusammendrücken kann, und sie sind an ihren Rändern durch einen vakuumdichten Randverbund miteinander verbunden.

Nach dem bekannten Stand der Technik werden Vakuumisolierglasscheiben dadurch hergestellt, dass auf eine erste Einzelglasscheibe in der vorgesehenen Rasteranordnung Abstandhalter aufgesetzt und durch Kleben fixiert werden und darauf dann die zweite Einzelglasscheibe aufgelegt wird. Die aufgelegte Glasscheibe hat im Bereich ihres Randes eine Bohrung mit einem eingedichteten, nämlich mit Glaslot fixierten oder angeklebten Absaugstutzen, an welchen ein Saugschlauch einer Vakuumpumpe angeschlossen werden kann. Die beiden Glasscheiben werden dann entlang ihrer Ränder mit Glaslot unter atmosphärischen Bedingungen laserverschweißt. Dazu ist die aufgelegte Glasscheibe in ihren Abmessungen um einige Millimeter kleiner als die darunter liegende Scheibe, so dass der Rand der aufgelegten Scheibe jeweils etwas mit Bezug auf den Rand der darunter liegenden Scheibe zurückgesetzt ist. Damit kann dann mittels eines von oben auf die Anordnung gerichteten Laserstrahls das Laserverschweißen der beiden Scheiben mit Glaslot erfolgen.

Nach dem Laserverschweißen der Scheiben wird der Scheibenzwischenraum über den Absaugstutzen evakuiert. Das Evakuieren erfolgt über ca. zwei Stunden oder länger, während der Glasverbund auf einer Temperatur von etwa 400°C bis etwa 450°C gehalten wird. Nur so lassen sich flüchtige Stoffe, hauptsächlich Wasser, die in den Glasoberflächen sitzen, aus dem Zwischenraum entfernen und das Vakuum in ausreichender Qualität herstellen.

Dieses langdauernde Evakuieren bei hoher Temperatur bedeutet nicht nur einen aufwendigen Herstellungsprozeß für das Vakuumisolierglas, sondern führt auch zu einer erheblichen Beeinträchtigung der Produktqualität. Üblicherweise ist die dem Scheibenzwischenraum zugewandte Oberfläche der bei Verwendung als Fensterscheibe innen liegenden Scheibe mit einer reflektierenden Beschichtung bedampft, um Wärmestrahlung zu reflektieren, womit die Wärmeschutzfunktion verbessert wird. Wegen der beim Evakuieren über einen längeren Zeitraum angewendeten hohen Temperaturen ist allerdings der Einsatz hochwertiger Schichten mit niedrigem Emissionsgrad (Softcoatings) ausgeschlossen. Dies führt dazu, dass herkömmliche Vakuumverglasungen im Zweischeibenaufbau nur Wärmedämmwerte erreichen können, wie sie auch von guten konventionellen Isolierverglasungen erreicht werden.

Des weiteren führt die über ca. zwei Stunden einwirkende hohe Temperatur von etwa 450°C beim Evakuieren zur Enttemperung von Einscheibensicherheitsglas, wodurch dieses seine Sicherheitsglaseigenschaft weitgehend verliert.

Aus der EP-0 771 313 ist es bekannt, das Laserverschweißen der beiden durch einen Scheibenzwischenraum getrennten und darin mittels Abstandhaltern beabstandet gehaltenen Einzelscheiben einer Vakuumisolierglasscheibe in einer Vakuumkammer vorzunehmen, so dass ein anschließendes Evakuieren des Scheibenzwischenraums nicht mehr notwendig ist. Allerdings empfiehlt diese Druckschrift, die gesamten Einzelglasscheiben während des Verschweißens ihrer Ränder innerhalb der Vakuumkammer auf oder leicht über ihre Glühtemperatur zu erhitzen, um Spannungsrisse zu vermeiden. Damit besteht auch hier das Problem, dass keine wirksamen Schichten zum Erreichen eines niedrigen Emissionsgrads verwendet werden können und ein Enttempern von Einscheibensicherheitsglas stattfindet.

Unabhängig davon, ob das Randverschweißen der beiden Einzelscheiben in einem atmosphärischen Raum mit anschließendem Evakuieren des Scheibenzwischenraums oder in einer Vakuumkammer stattfindet, stellt sich bei Vakuumisolierglas nach dem Stand der Technik aber stets das erhebliche Problem, dass der durch das Verschweißen der Einzelscheiben erzeugte starre Glasrandverbund die im Betrieb auftretenden Belastungen nicht aushält. Denn die beiden durch den Vakuumzwischenraum voneinander getrennten Einzelscheiben nehmen im Einsatz unterschiedliche Temperaturen ein, da die dem Raum zugewandte Scheibe warm und die der Außenluft zugewandte Scheibe kühler ist, wobei die Verwendung einer Beschichtung zur Reduzierung von Wärmeabstrahlung die Temperaturdifferenz noch deutlich erhöht. Die dadurch erzeugten Wärmedifferenzen zwischen den beiden Einzelscheiben führen zu erheblichen mechanischen Spannungen. Dies bedeutet eine notwendige Eingrenzung von herkömmlichem Vakuumisolierglas auf nicht allzu große maximale Formate. Solche Vakuumisolierglasscheiben lassen also nur eine bestimmte mäßige Fenstergröße zu. Außerdem ist über das Langzeitverhalten solcher Vakuumisolierglasscheiben unter den im Einsatz auftretenden mechanischen Belastungen noch nichts Zuverlässiges bekannt.

Aus der EP 0 421 239 A2 ist ein Vakuumisolierglas-Bauelement nach dem Oberbegriff des Anspruchs 1 bekannt, bei welchem an den Rändern von zwei über Abstandhalterelemente aneinander abgestützten Glasscheiben jeweils vakuumdicht mit den Glasscheiben verbundene Metallfolienelemente mit L-Winkelprofil angebracht sind, und wobei die jeweils rechtwinklig zur Scheibenebene verlaufenden, einander zugewandten Schenkel der L-förmigen Metallfolien-Winkelprofile der beiden Glasscheiben mit ihren Enden stumpf aneinandergestoßen und verschweißt sind.

Aufgabe der Erfindung ist es daher, Vakuumisolierglas-Bauelemente zu schaffen, die zum einen deutlich bessere Wärmedämmwerte als gutes Zweischeibenisolierglas erreicht, das andererseits aber nur einen Herstellungsaufwand erfordert, der zumindest nicht wesentlich höher als der Herstellungsaufwand eines guten Zweischeibenisolierglases ist, und das im Einsatz durch Temperaturunterschiede der beiden Einzelscheiben auftretende mechanische Belastungen erheblich besser aufnehmen kann als herkömmliches Vakuumisolierglas und damit eine zuverlässige Langzeitlebensdauer verspricht.

Diese Aufgabe wird gemäß der Erfindung durch das im Anspruch 1 angegebene Vakuumisolierglas-Bauelement gelöst.

Vorteilhafte Ausgestaltungen und Weiterbildungen der Erfindung sind Gegenstand der Unteransprüche.

Ein besonders vorteilhaftes Verfahren zur Herstellung erfindungsgemäßer Vakuumisolierglas-Bauelemente ist Gegenstand der Verfahrensansprüche.

Bei der erfindungsgemäßen Anordnung sind also die beiden Einzelscheiben an ihren Rändern jeweils mit einem Metallfolienstreifen verbunden, und die Metallfolienstreifen der beiden Einzelscheiben sind miteinander verschweißt. Dadurch wird eine dauerhaft vakuumdichte Verbindung zwischen den beiden Einzelscheiben hergestellt, die jedoch nicht starr ist, sondern relative Wärmebewegungen der beiden Einzelscheiben mit Bezug zueinander zulässt. Diese wird im wesentlichen spannungsfrei von den miteinander verschweißten Metallfolienstreifen aufgenommen. Da hierdurch ein vakuumdichter, nichtstarrer und im Einsatz auch bei starken Temperaturdifferenzen der beiden Einzelscheiben im wesentlichen frei von mechanischen Spannungen bleibender Randverbund des Vakuumisolierglas-Bauelements geschaffen wird, kann auch die Langzeitbeständigkeit des Randverbunds als unproblematisch beurteilt werden, ohne dass durch thermische Einwirkungen auf die Scheiben im Langzeitbetrieb Rissbildungen zu befürchten sind, die zu einem Vakuumverlust führen könnten.

Als wesentliche Vorteile der erfindungsgemäßen Anordnung ergeben sich damit nicht nur eine vorhersagbare Langzeitbeständigkeit erfindungsgemäßer Vakuumisolierglas-Bauelemente, sondern es entfällt auch eine Begrenzung auf relativ kleine Formate, wie sie bei dem starren Randverbund herkömmlicher Vakuumisolierglasscheiben aufgrund der Glasverschweißung der beiden Einzelscheiben gegeben ist.

Das Verbinden der Glasplattenränder mit den Metallfolienstreifen kann entweder mit Hilfe von Glaslot durch Schmelzverschweißen oder durch "kaltes" Verschweißen mittels Ultraschall erfolgen. Dabei wird das Ultraschallschweißen bevorzugt, da es keine thermischen Belastungen verursacht. Außerdem ist der Prozeß beim Ultraschallschweißen einfacher als beim Schmelzverschweißen mit Glaslot.

Damit ergibt sich als weiterer erheblicher Vorteil des erfindungsgemäßen Vakuumisolierglas-Bauelements, dass bei Anwendung des Ultraschallschweißens keinerlei thermische Beanspruchung und Beeinträchtigung der Glasplatten erfolgt. Besteht eine der Glasplatten aus Sicherheitsglas, findet kein Enttempem durch Wärmeeinwirkung statt, und die Sicherheitsglasstruktur bleibt unverändert erhalten. Außerdem können hochwertige Niederemissions-Beschichtungen Anwendung finden, die durch die Herstellung des Randverbunds nicht beeinträchtigt werden und damit sehr hohe Wärmedämmwerte des Vakuumisolierglas-Bauelements ermöglichen.

Die Herstellung des Randverbunds ist verfahrenstechnisch relativ einfach. Das Ultraschallverschweißen (oder auch das Glaslot-Schmelzverschweißen) der Glasplattenränder mit den Metallfolienstreifen kann unter atmosphärischen Bedingungen erfolgen. Das anschließende Verschweißen der über die Glasplattenränder überstehenden Bereiche der mit den Glasplattenrändem verbundenen Metallfolienstreifen kann in einer Vakuumkammer durch Laserverschweißen erfolgen, so dass kein nachträgliches Evakuieren des Scheibenzwischenraums erforderlich ist. Danach können, wieder außerhalb der Vakuumkammer, die verschweißten Überstände der Metallfolienstreifen nach der einen oder anderen Seite des Bauelements umgebogen werden, und der Randverbund ist fertig.

Die Metallfolienstreifen sind vorzugsweise an den einander zugewandten Seiten der Glasplatten angebracht. Vor dem Verschweißen der Metallfolienstreifen in der Vakuumkammer wird zweckmäßigerweise auf einen der Metallfolienstreifen auf einen, bezogen auf die herzustellende Schweißnaht, dem Scheibeninnenraum zugewandten Bereich desselben ein Gettermaterial aufgebracht, das zum Absorbieren etwa noch vorhandener Feuchtigkeitsmoleküle in dem Scheibenzwischenraum dient.

Ein Ausführungsbeispiel eines Vakuumisolierglas-Bauelements nach der Erfindung sowie ein Verfahren werden nachstehend unter Bezugnahme auf die anliegenden Zeichnungen mehr im Einzelnen beschrieben. In den Zeichnungen zeigt:
- Fig. 1: im Querschnitt einen Randbereich eines Vakuumisolierglas-Bauelements nach der Erfindung,
- Fig. 2: die zwei einzelnen Glasplatten des Bauelements mit angebrachten Metallfolienstreifen vor dem Zusammensetzen,
- Fig. 3: die zusammengesetzten Einzelglasplatten nach dem Verschweißen der überstehenden Bereiche der Metallfolienstreifen,
- Fig. 4: einen schematischen Schnitt durch den Randbereich eines als Solarmodul ausgebildeten Vakuumisolierglas-Bauelexnents nach der Erfindung,
- Fig. 5: eine Abwandlung der Anordnung nach Fig. 1,
- Fig. 6: ein schematisches Diagramm, das den Ablauf des Herstellungsverfahrens von Vakuumisolierglas-Bauelementen nach der Erfindung verdeutlicht,
- Fig. 7: in schematischer Darstellung die Reinigungsstufe des Verfahrens in einer ersten Vakuumkammer, und
- Fig. 8: in schematischer Darstellung die Laserschweißstufe des Verfahrens in einer zweiten Vakuumkammer.

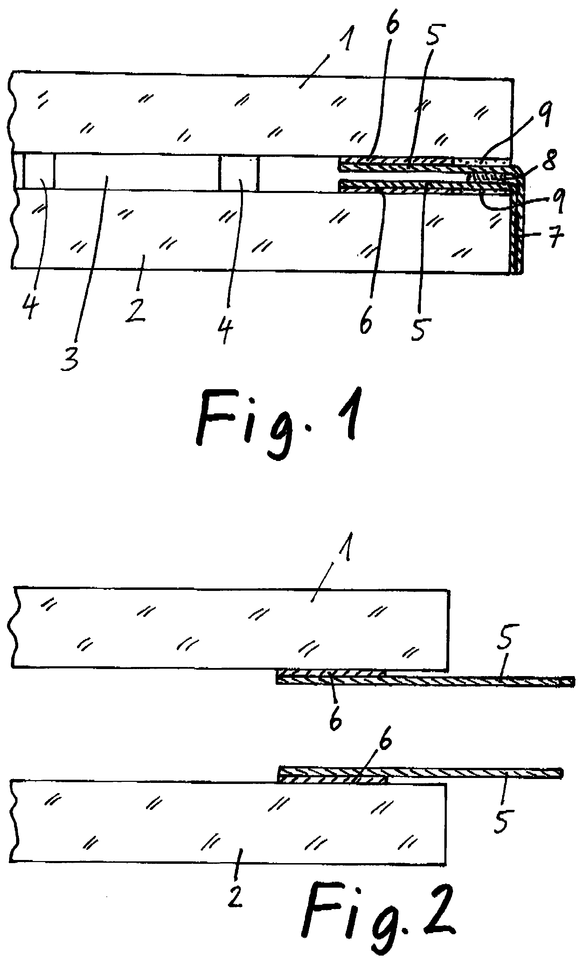

Fig. 1. zeigt im Schnitt den Randbereich eines Vakuumisolierglas-Bauelements in Gestalt einer Vakuumisolierglasscheibe mit fertiggestelltem Randverbund. Die Anordnung besteht aus einer Deckscheibe 1 (äußere Scheibe) und einer Unterscheibe 2 (innere Scheibe), die durch einen Scheibenzwischenraum 3 voneinander getrennt sind. Im Scheibenzwischenraum 3 herrscht ein Vakuum. Die beiden Scheiben 1 und 2 werden durch Abstandhalter 4 im vorgesehenen gegenseitigen Abstand gehalten, die in einer Rasteranordnung auf der Unterscheibe 4 fixiert sind, beispielsweise durch Verkleben, und auf denen sich die Deckscheibe 1 abstützt. Die Abstandhalter können, wie dargestellt, kleine Glaszylinder sein, sie können aber auch als Kugeln ausgebildet sein und sie können auch aus Metall bestehen.

Die Deckscheibe 1 und die Unterscheibe 2 können jeweils eine Dicke von 4 mm haben, und der Scheibenzwischenraum kann eine Dicke von vorzugsweise im Bereich von 0,7 mm bis 1 mm haben.

Am Rand jeder der beiden Scheiben 1, 2 ist ein Metallfolienstreifen 5 vakuumdicht angebracht. Dabei sind die Metallfolienstreifen 5 vorzugsweise an den einander bzw. dem Scheibenzwischenraum 3 zugewandten Seiten der beiden Scheiben 1, 2 angebracht.

Das Verbinden der Metallfolienstreifen 5 mit der jeweiligen Scheibe kann entweder durch Verschweißen mittels Glaslot erfolgen, vorzugsweise aber durch Ultraschallschweißen. Das Ultraschallschweißen erfolgt unter Zwischenlegen eines dünnen Aluminiumfolienstreifens 6 zwischen den jeweiligen Metallfolienstreifen 5 und die Glasoberfläche, wobei das Aluminium sich innig mit der Glasoberfläche sowie auch mit dem aus anderem Metall, vorzugsweise Edelstahl, bestehenden Metallfolienstreifen 5 verbindet. Die über die Glasscheibenränder überstehenden Bereiche der an den beiden Scheiben angebrachten Metallfolienstreifen 5 sind zusammengedrückt und miteinander vorzugsweise durch Laserschweißen verschweißt. Dabei ist einwärts der Schweißnaht 7 zwischen den Metallfolienstreifen 5, also noch im Scheibenzwischenraum, ein Gettermaterial 8 angeordnet, das vor dem Verschweißen der Metallfolienstreifen 5 auf den unten liegenden Metallfolienstreifen aufgebracht worden ist. Der verschweißte Überstandsbereich der Metallfolienstreifen 5 ist an die Kantenfläche der Unterscheibe 2 heran gebogen. Das Cettermaterial braucht nicht zwischen den Scheiben angeordnet zu sein, wie dargestellt (wo es bei dünnem Scheibenzwischenraum in der Regel auch keinen Platz hat), sondern kann sich in dem umgebogenen Bereich der verschweißten Metallfolienstreifen befinden.

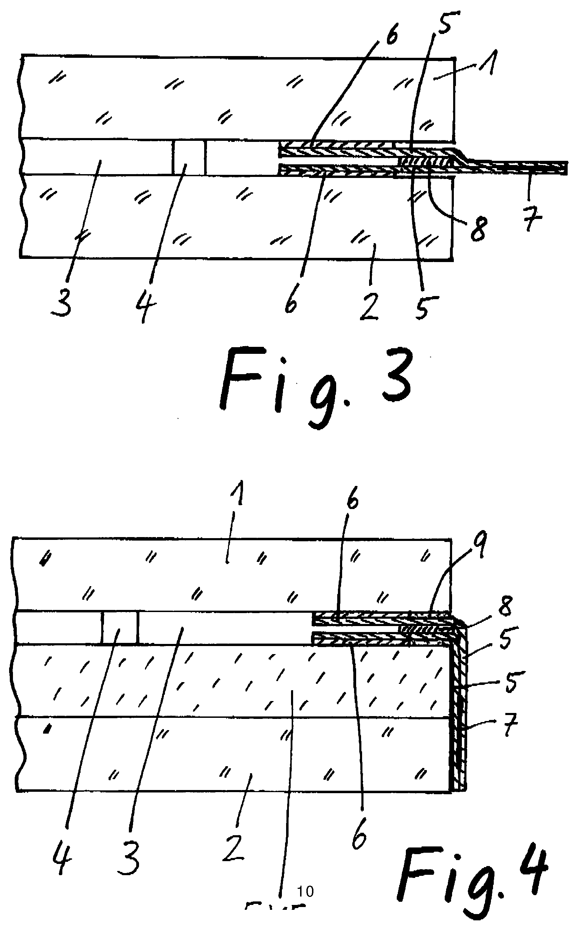

Die Fig. 2 und 3 zeigen zur Erläuterung Vorstufen des fertigen Randverbunds des Vakuumisolierglas-Bauelements nach Fig. 1.

Fig. 2 zeigt die beiden noch einzelnen Scheiben Deckscheibe 1 und Unterscheibe 2 mit dem jeweils am Rand angeschweißten Metallfolienstreifen 5. Auf der Unterscheibe 2 sind außerdem bereits die Abstandhalter 4 aufgesetzt.

Fig. 3 zeigt die zusammengefügte Anordnung von Oberscheibe 1 und Unterscheibe 2 mit den daran verschweißten Metallfolienstreifen 5, wobei die über die Scheibenränder überstehenden Bereiche der Metallfolienstreifen 5 durch die Schweißnaht 7 miteinander verschweißt sind. Durch Abbiegen des verschweißten Überstandsbereichs der Metallfolienstreifen 5 an die Kantenfläche der Unterscheibe 2 heran entsteht dann der fertige Randverbund, wie er in Fig. 1 dargestellt ist.

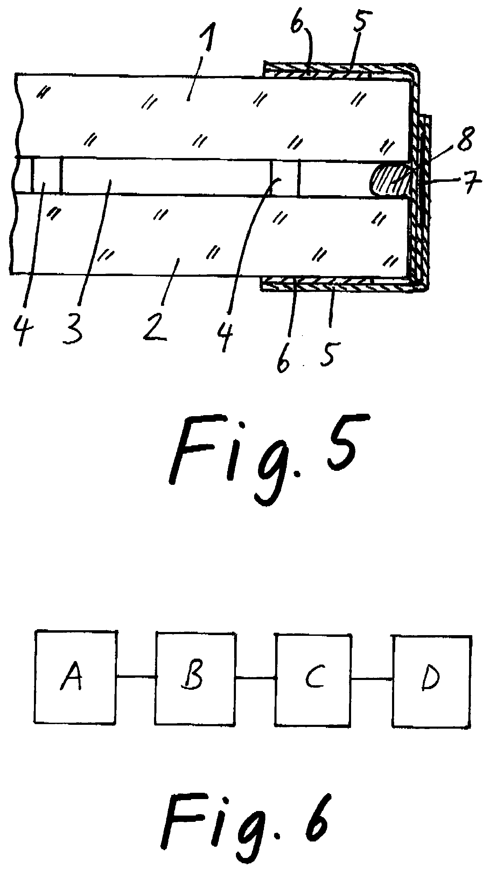

Fig. 4 zeigt eine Anordnung, wie sie in Fig. 1 gezeigt ist, wobei jedoch die Unterscheibe 2 mit einem Zusatzmodul kombiniert (oder als solches ausgebildet) ist, hier mit einem Fotovoltaikmodul 10. Dabei bildet der Fotovoltaikmodul 10 mit der Unterscheibe 2 einen Verbund. Besteht, wie beim Ausführungsbeispiel nach Fig. 4, der Zusatzmodul ganz oder teilweise aus Glasmaterial, können die Metallfolienstreifen, wie in Fig. 4 dargestellt ist, ebenso wie bei der grundsätzlichen Ausführungsform nach Fig. 1 an den dem Scheibenzwischenraum 3 zugewandten Seiten der Deckscheibe 1 und der Unterscheibe 2 bzw. dem damit verbundenen Zusatzmodul angebracht sein. Eignet sich hingegen der Zusatzmodul nicht für ein vakuumdichtes Anbringen des betreffenden Metallfolienstreifens 5, kann die in Fig. 5 dargestellte, nachstehend beschriebene Anordnung gewählt werden. Meistens wird aber die eine Scheibe, hier die Unterscheibe, selbst den Zusatzmodul durch eine integrierte besondere Funktion bilden.

Fig. 5 zeigt eine Abwandlung der Ausbildung des vakuumdichten Randverbunds der Anordnung nach Fig. 1. Sie unterscheidet sich dadurch von der Ausführungsform nach Fig. 1, dass die Metallfolienstreifen 5 nicht an den einander zugewandten Seiten der Einzelglasscheiben 1 und 2 angebracht sind, sondern an deren Außenseiten. Diese Ausführungsform nach Fig. 5 ist möglich und hinsichtlich der Qualität des vakuumdichten Randverbunds auch gleichwertig wie die Ausführungsform nach Fig. 1, aber sie bedingt, dass die beiden Außenflächen des fertigen Vakuumisolierglas-Bauelements nicht bis zur Randkante vollkommen glatt sind, sondern am Rand eine kleine Flächenerhebung wegen der dort angebrachten Metallfolienstreifen 5 haben. Das könnte in manchen Anwendungsfällen störend sein, weshalb diese zweite Ausführungsform nach Fig. 5 weniger bevorzugt erscheint.

Das bevorzugte Material für die Randfolienstreifen 5 bei allen Ausfuhrungsformen ist Edelstahl.

Wie aus den Zeichnungsfiguren 1 bis 3 hervorgeht, kann der äußere Spalt zwischen den Einzelscheiben 1 und 2 und den daran befestigten Metallfolienstreifen 5 im Bereich zwischen der jeweiligen Einzelscheibenaußenkante und dem Verbindungs- bzw. Verschweißungsbereich mit der Glasplattenoberfläche durch ein Füllmaterial 9 versiegelt sein. Dieses hat zwei Funktionen. Es sichert die Langzeit-Vakuumdichtigkeit, indem es Verschweißung zwischen den Metallfolienstreifen und dem Glas vor äußeren Einwirkungen schützt und mechanische Beanspruchungen reduziert. Und es schützt die Scheibenkanten beim Umbiegen der verschweißten Metallfolienstreifen vor starker mechanischer Beanspruchung.

Fig. 6 zeigt in Gestalt eines schematischen Blockdiagramms den Ablauf eines bevorzugten Verfahrens zur Herstellung von vorstehend beschriebenen erfindungsgemäßen Vakuumisolierglas-Bauelementen.

In einem ersten Verfahrensschritt A erfolgt unter atmosphärischen Bedingungen das Vorbereiten der beiden Einzelglasscheiben. Dieses umfasst das Verbinden der Einzelscheiben mit den Metallfolienstreifen sowie das Anbringen der Abstandhalter an der Unterscheibe sowie gegebenenfalls das Aufbringen des Gettermaterials.

Der zweite Verfahrensschritt B ist das Reinigen der beiden Einzelscheiben, insbesondere das Entfernen von Wassermolekülen von den Scheibenoberflächen. Besonders Beschichtungen der Scheiben binden Wassermoleküle, die daraus nur schwer entfernbar sind. Im Stand der Technik ist dazu längeres Erhitzen auf hohe Temperaturen notwendig, was aber unerwünscht ist, da hohe, insbesondere länger einwirkende Temperaturen hochwertige Beschichtungen zum Herabsetzen des Emissionsgrads (sogenannte Low-E-Schichten) zerstören und außerdem die Glasstruktur, beispielsweise bei Sicherheitsglas zerstören, wie schon oben erläutert worden ist. Dieser Reinigungsschritt erfolgt daher bei dem erfindungsgemäßen Verfahren ohne Temperatureinwirkung durch Ionenscuttering (Beschuß der Glasscheibenoberfläche mit einer Tonenwolke), wobei die Ionen die Feuchtigkeit aufnehmen und abtransportieren, oder durch Plasmareinigen, auch Plasmaätzen genannt. Dieser Verfahrensschritt erfolgt in einer ersten Vakuumkammer unter ständigem Absaugen, um die von den Scheibenoberflächen gelöste Feuchtigkeit abzutransportieren. Sehr wichtig ist dabei, dass jeweils beide Seiten jeder Einzelscheibe von Feuchtigkeit gereinigt werden, also auch jeweils diejenige Seite, die nicht den evakuierten Scheibenzwischenraum begrenzt. Das ist deshalb notwendig, weil jeder Feuchtigkeitsantrag in die Hochvakuumkammer, in welcher das Laserverschweißen der Metallfolienstreifen erfolgt, sorgfältig vermieden werden muß, da sonst das Hochvakuum beeinträchtigt wird.

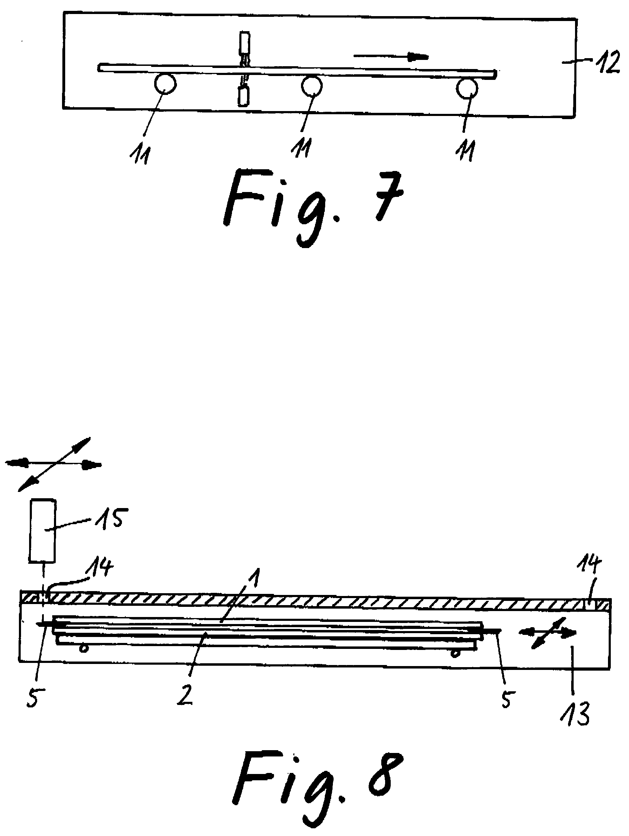

Fig. 7 zeigt schematisch die Reinigungsstufe gemäß dem Verfahrensschritt B in der ersten Vakuumkammer durch Ionenscuttering oder Vakuumätzen von beiden Seiten der Platte, wobei das Ionenscuttering bzw. das Vakuumätzen jeweils lineinförmig über die Plattenbreite erfolgt, während die Glasscheibe auf Transportmitteln 11 diese erste Vakuumkammer 12 durchläuft.

Der dritte Verfahrensschritt C ist das Laserverschweißen der Metallfolienstreifen in einer zweiten Vakuumkammer 13, die sich schematisch in Fig. 8 im Schnitt dargestellt ist. Dabei wird zunächst die Unterscheibe 2 in die Vakuumkammer 13 eingeführt und anschließend die Oberscheibe eingeführt und aufgelegt. Die Vakuumkammer 13 hat an ihrer Oberseite entlang aller vier Randbereiche jede jeweils linienförmige Fenster 14, die natürlich im notwendigen Maß durch für die Integrität der Deckwand der Vakuumkammer 13 erforderliche Brücken aus tragendem Material unterbrochen sind. Eine Laserkanone 15 ist außerhalb, nämlich oberhalb der Vakuumkammer 13 angeordnet und entlang der Fenster 14 verfahrbar, um einen Laserstrahl durch die Fenster 14 auf die zu verschweißenden Metallfolienstreifen zu richten. Die Scheibenanordnung ist innerhalb der Vakuumkammer 13 auf einem entsprechenden Schlitten in der Scheibenebene verschiebbar angeordnet, da wegen der konstruktionsbedingten Unterbrechungen der Fenster 14 eine gewisse Verschiebbarkeit der Scheibenanordnung ergänzend zur Beweglichkeit der Laserkanone notwendig ist

Diese Anordnung bietet wesentliche Vorteile. Da die Laserkanone 15 außerhalb der Vakuumkammer 13 angeordnet ist und entlang der Fenster 14 verfahrbar ist, bedarf es keiner Spiegel und keiner sonstigen optischen Elemente oder Mechanismen innerhalb der Vakuumkammer, so dass diese mit einem geringstmöglichen Volumen ausgerührt werden kann. Ihre notwendige Länge und Breite orientiert sich an den Abmessungen der größten darin zu verschweißenden Scheibenanordnungen, und die Höhe der Vakuumkammer ist nur noch durch die Dicke der Scheibenanordnung und die notwendige Höhe des sie tragenden Schlittens bestimmt. Wegen der Verfahrbarkeit der Laserkanone 15 entfallen aber auch außerhalb der Vakuumkammer sonst notwendige komplizierte laseroptische Einrichtungen, insbesondere Spiegelmechanismen, und vereinfachen die Vorrichtung.

Im letzten Verfahrensschritt D erfolgt nach Herausnehmen der Scheibenanordnung mit den laserverschweißten Metallfolienstreifen aus der zweiten Vakuumkammer 13 noch die abschließende Nachbehandlung der Randbereiche, nämlich durch Einbringen des Füllmaterials 9, Umbiegen der laserverschweißten überstehenden Bereiche der Metallfolienstreifen, und gewünschtenfalls Aufbringen einer Schutzabdeckung auf den fertigen Randverbund.

## Patentansprüche

1. Vakuumisolierglas-Bauelement, mit einer ersten Glasscheibe (1) und einer zweiten Glasscheibe (2), die über Abstandhalterelemente (4) aneinander abgestützt sind und zwischen sich einen dünnen evakuierten Zwischenraum (3) einschließen sowie an ihren Rändern durch einen vakuumdichten Randverbund verschlossen sind,
wobei der Randverbund aus Metallfolienstreifen (5) hergestellt ist, von denen erste Metallfolienstreifen (5) mit den Rändern der ersten Glasplatte (1) vakuumdicht verbunden sind und zweite Metallfolienstreifen (5) mit den Rändern der zweiten Glasplatte (2) vakuumdicht verbunden sind, und wobei die ersten und zweiten Metallfolienstreifen miteinander verschweißt sind,
**dadurch gekennzeichnet, dass** die über die Randkanten der jeweiligen Glasscheibe (1, 2) überstehenden Bereiche der ersten und zweiten Metallfolienstreifen (5) zusammengedrückt und miteinander laserverschweißt sind, und dass die zusammengedrückt laserverschweißten überstehenden Bereiche der Metallfolienstreifen nach der einen oder anderen Seite des Bauelements umgebogen sind.

2. Vakuumisolierglas-Bauelement nach Anspruch 1, wobei die Metallfolienstreifen (5) mit der jeweiligen Glasplatte (1, 2) durch Ultraschallschweißen verbunden sind, wobei zwischen dem jeweiligen Metallfolienstreifen (5) und der jeweiligen Glasplatte (1, 2) ein dünner Aluminiumfolienstreifen (6) zwischengelegt ist, der durch das Ultraschallschweißen einerseits vakuumdicht mit der Glasoberfläche und andererseits vakuumdicht mit dem Metallfolienstreifen (5) verbunden wird.

3. Vakuumisolierglas-Bauelement nach Anspruch 1, wobei die Metallfolienstreifen (5) mit der jeweiligen Glasplatte (1, 2) durch Verschweißen mittels Glaslot verbunden sind.

4. Vakuumisolierglas-Bauelement nach einem der Ansprüche 1 bis 3, wobei ein Gettermaterial (8) auf mindestens einen der Metallfolienstreifen (5) aufgebracht ist, das sich nach dem Verschweißen der Metallfolienstreifen auf der dem evakuierten Zwischenraum (3) zwischen den beiden Glasplatten (1, 2) Seite der Schweißnaht (7) zwischen den Metallfolienstreifen liegt.

5. Vakuumisolierglas-Bauelement nach einem der Ansprüche 1 bis 4, wobei die Metallfolienstreifen (5) jeweils an den einander zugewandten Seiten der beiden Glasplatten (1, 2) diesen verbunden sind.

6. Vakuumisolierglas-Bauelement nach einem der Ansprüche 1 bis 5, wobei die Metallfolienstreifen (5) aus Edelstahl bestehen.

7. Vakuumisolierglas-Bauelement nach einem der Ansprüche 1 bis 6, wobei die der Außenluft zugewandten Spalträume zwischen den Metallfolienstreifen (5) und den jeweiligen Glasoberflächen jenseits des Metallfolienstreifen-Glasoberfläche-Verschweißungsbereichs mittels eines Füllmaterials (9) versiegelt sind.

8. Vakuumisolierglas-Bauelement nach einem der Ansprüche 1 bis 7, wobei die erste oder die zweite Glasplatte mit einem zusätzlichen Element, nämlich einem Solarmodul, einem Fotovoltaikmodul, oder einem sonstigen Element kombiniert oder als solches ausgebildet ist.

9. Verfahren zum Herstellen eines Vakuumisolierglas-Bauelements nach einem der Ansprüche 1 bis 8, bei welchem die vorbereiteten Glasscheiben (1,2) mit den daran angebrachten Metallfolienstreifen (5) in eine Vakuumkammer eingebracht und darin aufeinandergelegt werden, und wobei das Verschweißen der zusammengedrückten überstehenden Bereiche der Metallfolienstreifen innerhalb der Vakuumkammer (13) mittels eines außerhalb der Vakuumkammer erzeugten und im wesentlichen entlang der Metallfolienstreifen bewegten Laserstrahls erfolgt, der durch linienförmig verlaufende Fenster (14) in die Vakuumkammer (13) eingetragen wird, und wobei die verschweißten überstehenden Bereiche der Metallfolienstreifen anschließend nach der einen oder anderen Seite des Bauelements umgebogen werden.

10. Verfahren nach Anspruch 9, wobei die beiden Glasscheiben (1,2) vor dem Einbringen in die Vakuumkammer (13), in welcher das Verschweißen der Metallfolienstreifen (5) erfolgt, in einer weiteren Vakuumkammer (12) durch Ionensputtering oder Plasmaätzen auf beiden Seiten von Feuchtigkeit gereinigt werden.

## Claims

1. A vacuum insulated glass building element, having a first glass pane (1) and a second glass pane (2) that are supported on each other by spacer elements (4), form a thin evacuated intermediate space (3) between them and are closed off by a vacuum-tight edge sealing bond,
wherein the edge sealing bond is made of metal foil strips (5), wherein first ones of the metal foil strips (5) are connected to the edges of the first glass pane (1) in a vacuum-tight manner, and second ones of the metal foil strips (5) are connected to the edges of the second glass pane (1) in a vacuum-tight manner, and wherein the first and second metal foil strips (5) are welded to each other,
**characterized in that** the edge areas of the first and second metal foil strips (5) that protrude beyond the edges of the respective glass pane (1, 2) are pressed together and welded to each other by laser welding, and **in that** the protruding areas that are welded together by laser welding after being pressed together are bent to one or the other face of the building element.

2. The vacuum insulated glass building element according to claim 1, wherein the metal foil strips (5) are connected to the respective glass pane (1, 2) by ultrasound welding, wherein a thin aluminum foil strip (6) is interposed between the respective metal foil strip (5) and the respective glass pane (1, 2), the aluminum foil strip being connected, by the ultrasound welding, to the glass surface on one side and to the metal foil strip (5) on the other side, in a vacuum tight manner, respectively.

3. The vacuum insulated glass building element according to claim 1, wherein the metal foil strips (5) are connected to the respective glass panel (1, 2) by welding via glass solder.

4. The vacuum insulated glass building element according to any one of claims 1 to 3, wherein a getter material (8) is applied to at least one of the metal foil strips (5), the getter material being disposed on the side of the welding seam (7) between the metal foil strips (5) that faces the evacuated intermediate space (3) between the two glass panels (1, 2).

5. The vacuum insulated glass building element according to any one of claims 1 to 4, wherein the metal foil strips (5) are respectively connected to the two glass panes (1, 2) on the sides thereof that face each other.

6. The vacuum insulated glass building element according to any one of claims 1 to 5, wherein the metal foil strips (5) consist of stainless steel.

7. The vacuum insulated glass building element according to any one of claims 1 to 6, wherein the gap spaces facing the outside air between the metal foil strip (5) and the respective glass surfaces beyond the respective metal foil strip/glass surface weld areas are sealed by means of a filler material (9).

8. The vacuum insulated glass building element according to any one of claims 1 to 7, wherein the first or the second glass pane is combined with an additional element, that is, one of a solar module, a photovoltaic module and another element, or is configured as such an element.

9. A method for the manufacture of a vacuum insulated glass building element according to any one of claims 1 to 8, wherein the prepared glass panes (1, 2) together with the metal foil strips (5) applied thereto are introduced into a vacuum chamber and are stacked therein one on top of the other, and wherein the welding of the protruding areas of the metal foil strips that have been pressed together is performed within the vacuum chamber (13) by means of a laser beam produced outside of the vacuum chamber and moved substantially along the metal foil strips, the laser beam being introduced into the vacuum chamber (13) through linearly extending windows (14), and wherein the protruding areas of the metal foil strips that have been welded to each other another are subsequently bent to one or to the other side of the building element.

10. The method according to claim 9, wherein, before their introduction into the vacuum chamber (13) in which the metal foil strips (5) are welded together, the two glass-panes (1, 2) are cleaned in another vacuum chamber (12) on both sides by ion sputtering or plasma etching to remove any moisture.

## Revendications

1. Elément de construction en verre isolant sous vide, avec une première feuille de verre (1) et une seconde feuille de verre (2) appuyées l'une à l'autre au moyens des éléments d'écartement (4), enfermant entre elles un mince espace intermédiaire (3) évacué, et étant fermées au niveau de leurs bords par une liaison périphérique étanche au vide,
la liaison périphérique étant formée à partir des bandes de feuille de métal (5), dont premières bandes de feuille de métal (5) sont reliées de manière étanche au vide avec les bords de la première feuille de verre (1), et dont secondes bandes de feuille de métal (5) avec les bords de la seconde feuille de verre (2), dans lequel les premières et secondes bandes de feuille de métal sont soudées les unes avec les autres,
**caractérisé en ce que** les zones des premières et secondes bandes de feuille de métal (5) qui dépassent des bords périphériques de la feuille de verre (1, 2) respective sont comprimées et soudées les unes avec les autres par soudage au laser, et **en ce que** les zones dépassantes des premières et secondes bandes de feuille de métal comprimées et soudées les unes avec les autres par soudage au laser sont pliées vers l'un ou vers l'autre côté de l'élément de construction.

2. Elément de construction en verre isolant sous vide selon la revendication 1, dans lequel les bandes de feuille de métal (5) sont reliées avec la feuille de verre (1, 2) respective par soudage aux ultrasons, une mince bande de feuille d'aluminium (6) étant disposée entre la bande de feuille de métal (5) respective et la feuille de verre (1, 2) respective, la bande de feuille d'aluminium respectivement étant reliée avec la surface de verre de l'un côté, et avec la bande de feuille de métal (5) de l'autre côté, en chaque cas par soudage aux ultrasons de manière étanche au vide.

3. Elément de construction en verre isolant sous vide selon la revendication 1, dans lequel les bandes de feuille de métal (5) sont reliées avec la feuille de verre (1, 2) respective par soudage au moyen d'une brasure de verre.

4. Elément de construction en verre isolant sous vide selon l'une quelconque des revendications 1 à 3, dans lequel un matériau getter (8) est appliqué sur au moins une des bandes de feuille de métal (5), de sorte que, après le soudage des bandes de feuille de métal, il est disposé sur le côté du cordon de soudure (7) entre les bandes de feuille de métal (5) tourné vers l'espace intermédiaire (3) évacué entre les deux feuilles de verre (1, 2).

5. Elément de construction en verre isolant sous vide selon l'une quelconque des revendications 1 à 4, dans lequel les bandes de feuille de métal (5) sont reliées avec les feuilles de verre (1, 2) respectivement sur les côtés de celles-ci tournés l'un vers l'autre.

6. Elément de construction en verre isolant sous vide selon l'une quelconque des revendications 1 à 5, dans lequel les bandes de feuille de métal (5) sont en acier inoxydable.

7. Elément de construction en verre isolant sous vide selon l'une quelconque des revendications 1 à 6, dans lequel les espaces de séparation entre les bandes de feuille de métal (5) et les surfaces de verre tournés vers l'extérieur sont scellés au moyen d'un matériau de remplissage (9) en dehors de la zone de soudure de la bande de feuille de métal et la surface de verre.

8. Elément de construction en verre isolant sous vide selon l'une quelconque des revendications 1 à 7, dans lequel la première ou la seconde feuille de verre est combinée avec un élément additionnel, à savoir l'un d'un module solaire, un module photovoltaïque et un autre élément, ou est elle-même configurée sous forme d'un tel élément.

9. Procédé pour la fabrication d'un élément de construction en verre isolant sous vide selon l'une quelconque des revendications 1 à 8, dans lequel les feuilles de verre (1, 2) préparées, avec les bandes de feuille de métal (5) appliquées à celles-ci, sont introduites dans une chambre à vide et placées l'une au dessus de l'autre dans celle-ci, et dans lequel la soudure des zones dépassantes et comprimées des bandes de feuille de métal est effectuée à l'intérieur de la chambre à vide (13) par un faisceau laser généré en dehors de la chambre à vide et se déplaçant le long de la bande de feuille de métal qui est introduit dans la chambre à vide (13) à travers des fenêtres (14) s'étendant sous forme de ligne, et dans lequel les zones soudées et dépassantes des bandes de feuille de métal sont pliées vers l'un ou vers l'autre côté de l'élément de construction.

10. Procédé selon la revendication 9, dans lequel, avant leur introduction dans la chambre à vide (13), où les bandes de feuille de métal (5) sont soudées, les deux feuilles de verre (1, 2) sont nettoyées dans une autre chambre à vide (12) des deux côtés par pulvérisation ionique ou par gravure à plasma pour éliminer toute humidité.
